# FASCICULE DE BREVET EUROPEEN

(11) **EP 4 323 178 B1**
(45) Date de publication et mention de la délivrance du brevet: **11.06.2025**
(21) Numéro de dépôt: 22719969.2
(22) Date de dépôt: 04.04.2022
(51) Int. Cl.: B29B 11/16, B29D 99/00, B29C 70/24, C04B 35/80, C04B 35/83, C04B 35/628, C04B 35/571, C04B 35/01, B32B 18/00, B29C 70/48, B29C 33/48, B29C 70/46, B29C 33/50, B29L 31/00, B29L 31/08

(54) **PROCEDE DE FABRICATION D'UNE AUBE CREUSE DE TURBOMACHINE**
VERFAHREN ZUR HERSTELLUNG EINER HOHLEN TURBOMASCHINENSCHAUFEL
METHOD FOR MANUFACTURING A HOLLOW TURBOMACHINE BLADE

(30) Priorité: 14.04.2021 FR 2103851
(43) Date de publication de la demande: 21.02.2024
(73) Titulaire: SAFRAN AIRCRAFT ENGINES, 75015 Paris (FR)
(72) Inventeur: BLAISE, Maxime, Marie, Désiré, 77550 MOISSY-CRAMAYEL (FR); IGLESIAS CANO, Celia, 77550 MOISSY-CRAMAYEL (FR); LAUWICK, Lucas, Antoine, Christophe, 77550 MOISSY-CRAMAYEL (FR)
(74) Mandataire: Cabinet Beau de Loménie
(86) Numéro de dépôt international: PCT/FR2022/050628
(87) Numéro de publication internationale: WO 2022/219263

(56) Documents cités:
- WO-A1-2013/160584
- BE-A6- 1 018 117
- US-A1- 2015 040 396
- US-A1- 2015 224 693

## Description

### Domaine Technique

La présente invention se rapporte au domaine général des pièces creuses en matériau composite, et plus particulièrement aux aubes fixes ou stator pour moteur aéronautique à turbine à gaz de type aube directrice de sortie ou « OGV » (pour « outlet guide vane »).

### Technique antérieure

Dans le domaine des moteurs aéronautiques, les aubes de turbomachines peuvent être réalisées en matériau composite afin d'acquérir une résistance équivalente ou supérieure au métal, mais une masse globale inférieure. En effet, l'amélioration des performances de la turbomachine, en particulier par rapport à la consommation, nécessite une diminution de masse.

Dans le cas des aubes en matériau composite obtenues par tissage tridimensionnel, le matériau composite situé au cœur de l'aube n'a qu'une influence réduite sur les performances mécaniques de la pièce, alors qu'il compte pour une part non négligeable de la masse de l'aube. Ainsi, il est intéressant de fabriquer des aubes creuses, constituées d'un renfort fibreux obtenu par tissage tridimensionnel.

Les structures fibreuses peuvent être drapées de manière bien connue autour d'une pièce de conformation métallique. Après densification des structures fibreuses, on procède à la fusion de la pièce de conformation métallique. Ce procédé permet de fabriquer une aube creuse, et donc relativement légère, pouvant adopter des formes variées. En revanche, le procédé de fusion du métal ajoute une étape supplémentaire dans le procédé, pour un coût élevé. En outre, les hautes températures nécessaires pour cette étape ont un impact non négligeable sur les propriétés mécaniques de la pièce, et notamment sur son potentiel de réparation. Enfin, l'étape de fusion du métal de conformation peut laisser des résidus non désirés à l'intérieur de l'aube creuse.

Pour éviter ces contraintes, on peut utiliser de manière connue un mandrin métallique permettant de draper les structures fibreuses. Après densification des structures fibreuses, celui-ci est retiré mécaniquement. Ainsi, il n'y a pas d'étape supplémentaire de fusion du métal et un risque très réduit de laisser des résidus indésirables à l'intérieur de la pièce. En revanche, les géométries de cavité possibles sont fortement restreintes par cette opération de démoulage. Ainsi, les formes complexes souhaitées pour les aubes de nouvelles générations ne sont pas accessibles.

Le document US2015224693A1 divulgue un procédé de fabrication d'une pièce de turbomachine en matériau composite creuse selon le préambule de la revendication 1.

### Exposé de l'invention

La présente invention a pour but de proposer une solution qui permet de réaliser des pièces creuses en matériau composite, par exemple des aubes de turbomachine, en remédiant aux inconvénients précités.

A cet effet, l'invention propose un procédé de fabrication d'une pièce de turbomachine en matériau composite creuse comprenant au moins :
- la réalisation d'une ébauche fibreuse (100) en une seule pièce par tissage tridimensionnel de fils, ladite ébauche comprenant au moins une déliaison (102) formant une cavité interne,
- l'insertion d'une pièce de conformation (140) dans la cavité interne de l'ébauche fibreuse (100) pour obtenir une préforme,
- la densification de la préforme par une matrice pour obtenir une structure ayant un renfort fibreux constitué par ladite préforme et densifié par ladite matrice,
le procédé étant caractérisé en ce que la pièce de conformation est flexible et en ce que la pièce de conformation est retirée mécaniquement de la structure après l'étape de densification.

Ainsi, grâce à l'utilisation d'une pièce de conformation souple, il est possible de réaliser des formes de cavité complexes grâce à la déformabilité de la pièce de conformation qui lui permettra de sortir de la cavité après l'étape de densification. On s'affranchit ainsi de toute étape de fusion d'un métal, et ainsi de résidus indésirables ou de températures élevées après la densification pouvant altérer les performances mécaniques de la pièce.

Selon une caractéristique particulière de l'invention, la pièce de conformation comprend au moins deux parties qui peuvent être séparées lors du retrait de la pièce de conformation de la structure.

Selon une autre caractéristique particulière de l'invention, la jonction entre les deux parties de la pièce de conformation se situe au niveau de la section de plus faible aire de la pièce de conformation.

Selon une autre caractéristique particulière de l'invention, la jonction entre les deux parties de la pièce de conformation comprend une pluralité d'incisions permettant de faciliter la séparation desdites deux parties lors du retrait de la pièce de conformation de la structure.

Cette caractéristique permet d'introduire la pièce de conformation dans l'ébauche fibreuse sans que les deux parties de la pièce de conformation ne se détachent, tout en permettant une séparation aisée des deux parties au moment du démoulage. Cette caractéristique peut être mise en œuvre grâce aux propriétés du matériau de la pièce de conformation selon l'invention, et n'auraient pas pu être permises par une pièce de conformation intégralement métallique.

Selon une autre caractéristique particulière de l'invention, la pièce de conformation comprend au moins une zone d'accrochage située à l'extérieur de la préforme lors de l'étape de densification.

Selon l'invention, la pièce de conformation est réalisée dans au moins un matériau dont la dureté Shore A est comprise entre 30 et 80.

Selon une autre caractéristique particulière de l'invention, la pièce de conformation comprend un premier matériau et un deuxième matériau présentant des duretés différentes, le premier matériau étant présent de part et d'autre du deuxième matériau.

Par « de part et d'autre », on entend ici que le premier matériau est présent au moins sur un premier côté du deuxième matériau et sur un deuxième côté du deuxième matériau opposé au premier côté. Ainsi, le premier matériau peut encadrer le deuxième matériau, voire entourer le deuxième matériau entièrement.

Par « matériaux présentant des duretés différentes », on désigne des matériaux présentant des duretés différentes par rapport à une même échelle de dureté (par exemple deux silicones présentant des duretés Shore A différentes), ou des matériaux ne pouvant être comparés sur une même échelle de dureté (par exemple un silicone et un métal). Selon une autre caractéristique particulière de l'invention, le premier matériau présente une dureté Shore A comprise entre 30 et 60 et le deuxième matériau présente une dureté Shore A comprise entre 50 et 80.

L'utilisation d'un matériau plus souple pour la surface de la pièce de conformation permet de faciliter le démoulage de ladite pièce de conformation, alors que l'utilisation d'un matériau plus rigide au cœur de la pièce de conformation permet de faciliter l'insertion de la pièce de conformation dans l'ébauche fibreuse.

Selon une autre caractéristique particulière de l'invention, la pièce de conformation est réalisée en silicone.

Selon une autre caractéristique particulière de l'invention, le deuxième matériau est un métal.

Selon une autre caractéristique particulière de l'invention, la pièce en matériau composite est une aube fixe de turbomachine.

### Brève description des dessins

[Fig. 1] La figure 1 est une vue schématique en plan d'une ébauche fibreuse tissée destinée à la réalisation d'une préforme fibreuse conformément à un mode de réalisation de l'invention.
[Fig. 2] La figure 2 est une vue en coupe de l'ébauche fibreuse de la figure 1.
[Fig. 3] La figure 3 est une vue en coupe schématique d'un plan de tissage de l'ébauche des figures 1 et 2.
[Fig. 4] La figure 4 est une vue schématique de l'insertion d'une pièce de conformation en une seule partie dans la préforme fibreuse des figures 1 et 2.
[Fig. 5] La figure 5 est une vue schématique en plan d'une ébauche fibreuse tissée destinée à la réalisation d'une préforme fibreuse conformément à un mode de réalisation de l'invention.
[Fig. 6] La figure 6 est une vue en coupe de l'ébauche fibreuse de la figure 5.
[Fig. 7] La figure 7 est une vue schématique de l'insertion d'une pièce de conformation en deux parties dans la préforme fibreuse des figures 5 et 6.
[Fig. 8] La figure 8 est une vue en coupe dans la direction L de la vue de la figure 7.
[Fig. 9] La figure 9 est une vue schématique du démoulage d'une pièce de conformation en deux parties.
[Fig. 10] La figure 10 est une vue schématique en coupe dans la direction L d'une pièce de conformation bi-matériaux avec des cœurs en deuxième matériau entourés d'un premier matériau, conformément à un mode de réalisation de l'invention.
[Fig. 11] La figure 11 est une vue schématique en coupe dans la direction L d'une pièce de conformation bi-matériaux comprenant des renforts, conformément à un mode de réalisation de l'invention.

### Description des modes de réalisation

L'invention s'applique d'une manière générale à différents types de pièces creuses en matériaux composites comprenant un renfort fibreux obtenu par tissage tridimensionnel. L'invention trouve une application avantageuse pour les aubes de turbomachines, et notamment pour les aubes fixes ou stator pour moteur aéronautique à turbine à gaz de type aube directrice de sortie ou « OGV ».

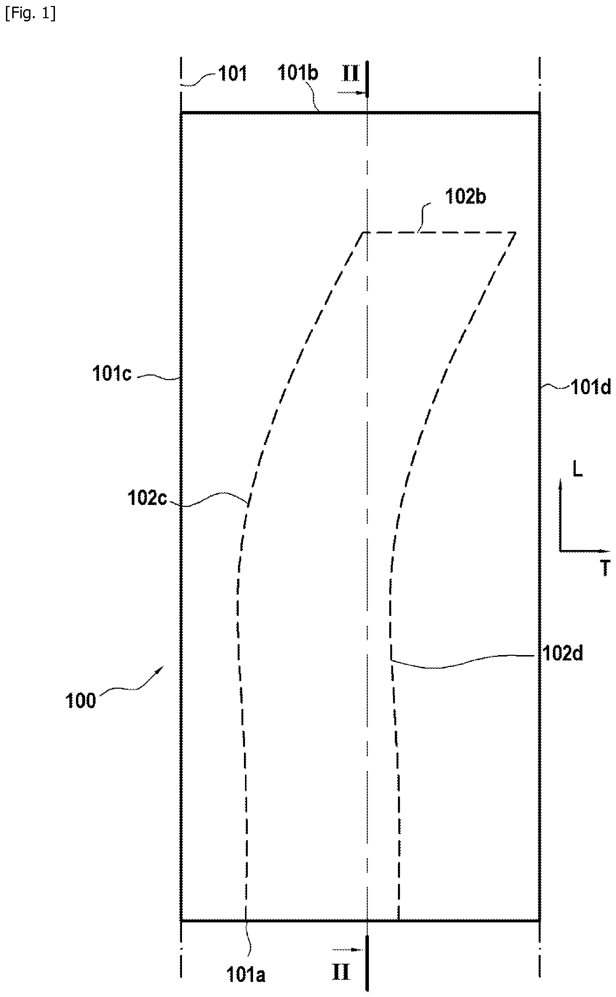

Selon un premier mode de réalisation de l'invention présenté sur les figures 1 à 4, on réalise une ébauche fibreuse 100 destinée à former la préforme fibreuse de la structure de l'aube.

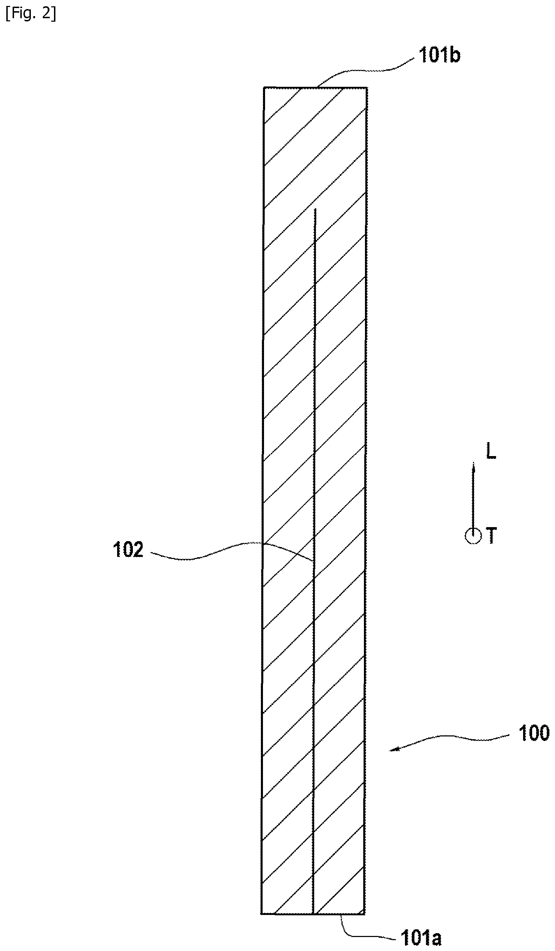

Les figures 1 et 2 montrent une ébauche fibreuse 100 à partir de laquelle une préforme fibreuse de l'aube peut être formée.

L'ébauche 100 est obtenue à partir d'une bande 101 tissée par tissage tridimensionnel (3D) ou multicouches, la bande 101 s'étendant de façon générale dans une direction L correspondant à la direction longitudinale de l'aube à fabriquer. Le tissage est réalisé par exemple avec des fils de chaîne s'étendant dans la direction L.

Une déliaison 102 est formée sensiblement au milieu de la bande 101, sur au moins une partie de la longueur de l'ébauche fibreuse 100 entre les bords longitudinaux 101c et 101d, entre des limites 102c et 102d. La déliaison 102 doit s'étendre au moins jusqu'à l'un des bords transversaux 101a et 101b. Dans l'exemple illustré sur les figures 1 et 2, la déliaison s'étend entre le bord transversal 101a et la limite 102b. Cette déliaison 102 permet de former une cavité interne dans l'ébauche fibreuse 100, destinée à permettre le passage de la pièce de conformation.

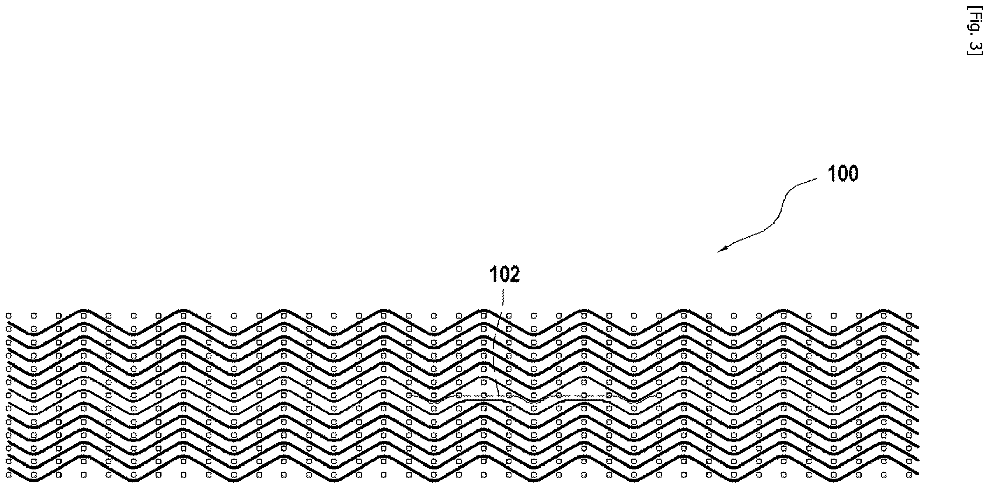

La figure 3 montre un exemple de tissage 3D avec armure interlock comprenant la déliaison 102. Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

De façon bien connue, la déliaison est ménagée entre deux couches de fils de chaîne en omettant de faire passer un fil de trame à travers la zone de déliaison pour lier des fils de couches de chaîne situées de part et d'autre de la déliaison.

L'ébauche fibreuse 100 comprend une pluralité de couches de fils de chaîne (six dans l'exemple illustré) qui sont liées par tissage 3D sauf au niveau de la déliaison 102. Hors la déliaison 102, les couches de fils de chaîne de l'ébauche 100 sont, dans l'exemple illustré, toutes liées entre elles.

On peut utiliser pour le tissage des fils en céramique, notamment des fils à base de carbure de silicium (SiC), par exemple ceux fournis sous la dénomination « Nicalon » par la société japonaise Nippon Carbon. D'autres fils en céramique sont utilisables notamment des fils en oxyde réfractaire, tels que des fils à base d'alumine Al₂O₃, en particulier pour des matériaux CMC de type oxyde/oxyde (fibre du renfort fibreuxet matrice en oxyde réfractaire). On peut également utiliser des fils de carbone pour un matériau CMC à renfort fibreux en carbone.

La bande fibreuse peut être traitée pour éliminer l'ensimage présent sur les fibres et la présence d'oxyde à la surface des fibres comme connu en soi.

Egalement connu en soi, une mince couche de revêtement d'interphase de défragilisation peut être ensuite formée sur les fibres de la bande filtreuse par infiltration chimique en phase gazeuse, ou CVI (« Chemical Vapour Inflitration »). Le matériau d'interphase est par exemple du carbone pyrolytique PyC, du nitrure de bore BN ou du carbone dopé au bore BC. L'épaisseur de la couche formée est pas exemple compris entre 10 nanomètres et 100 nanomètres pour conserver une capacité de déformation des ébauches fibreuses.

La bande fibreuse est ensuite imprégnée par une composition de consolidation, typiquement une résine précurseur de carbone ou une résine précurseur de céramique éventuellement diluée dans un solvant. La consolidation peut être réalisée en étuve.

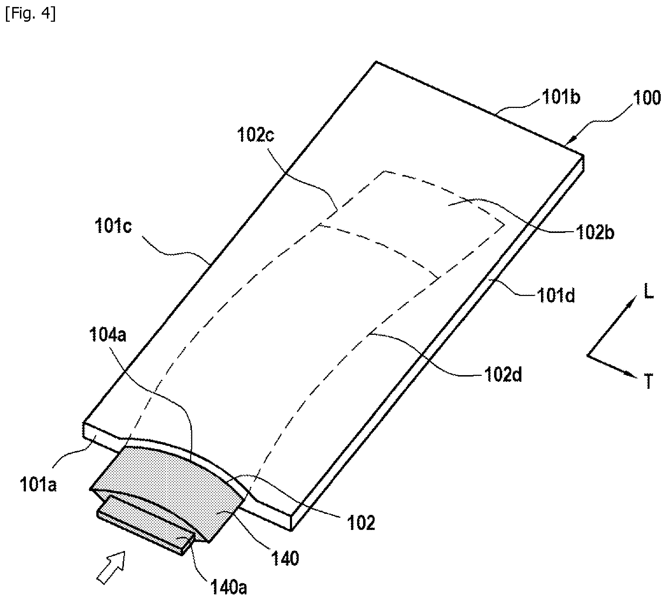

Selon ce premier mode de réalisation de l'invention, la conformation de l'ébauche fibreuse 100 en une préforme est réalisée en introduisant une pièce de conformation flexible 140 dans l'ébauche 100 par la déliaison 102, comme présenté sur la figure 4. On peut s'assurer que l'ébauche fibreuse 100 épouse bien la géométrie de la pièce de conformation 140.

La pièce de conformation 140 a une forme correspondante à celle de la cavité à réaliser dans l'aube. Ainsi, la pièce de conformation 140 peut avoir une forme correspondante à celle de la pièce à réaliser.

On procède ensuite à la densification de la préforme fibreuse, en comblant la porosité de la préforme, dans tout ou partie du volume de celle-ci, par le matériau constitutif de la matrice.

La matrice du matériau composite constituant la structure à profil aérodynamique peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme disposée autour de la pièce de conformation est placée dans un moule pouvant être fermé de manière étanche avec un logement ayant la forme de la pièce finale moulée et pouvant notamment présenter une forme vrillée correspondant à la forme définitive de la structure à profil aérodynamique. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la structure à profil aérodynamique. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse est préférentiellement réalisée par le procédé bien connu de moulage par transfert dit RTM ("Resin Transfert Moulding"). Conformément au procédé RTM, on place la préforme fibreuse disposée autour de la pièce de conformation 140 dans un moule présentant la forme extérieure de la pièce souhaitée. La pièce de conformation 140 peut jouer le rôle de contre-moule. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée en retirant la pièce de conformation flexible.

Pour faciliter les étapes de moulage et de démoulage, voire l'étape de consolidation de la préforme en étuve, la pièce de conformation 140 peut comporter des dispositifs d'accrochages 140a comme illustré sur la figure 4. Ces dispositifs d'accrochage peuvent permettre de saisir le mandrin en référence sur le moule pour le positionner correctement par rapport à la préforme.

La pièce de conformation 140 peut être réalisée en silicone. Le matériau choisi pour réaliser la pièce de conformation doit supporter les températures de mise en œuvre du composite, particulièrement lors de l'étape de polymérisation. Le matériau doit être suffisamment flexible pour être retiré de la cavité 104a. Ainsi, plus la cavité présente une géométrie tortueuse, plus la pièce de conformation devra présenter une certaine souplesse. En revanche, la pièce de conformation ne doit pas être trop souple pour limiter son absorption de la texture de surface du composite, ce qui génèrerait des difficultés au démoulage. Ainsi, la pièce de conformation 140 a une dureté Shore A comprise entre 30 et 80, avec de préférence une dureté Shore A comprise entre 50 et 80.

Selon un mode de réalisation particulier de l'invention, la pièce de conformation peut être réalisée en plusieurs matériaux.

Par exemple, la pièce de conformation peut comprendre une partie en deuxième matériau, encadrée par deux parties en premier matériau présentes de part et d'autre de la partie en deuxième matériau selon la direction transversale T, perpendiculaire à la direction L correspondant à la direction longitudinale de l'aube à fabriquer (variante non illustrée).

Selon un autre exemple, la pièce de conformation peut comprendre un premier matériau présent au moins sur sa surface, le premier matériau étant présent autour d'un ou plusieurs cœurs en deuxième matériau (variante non illustrée).

Le premier matériau peut présenter une dureté Shore A comprise entre 30 et 60, afin d'obtenir une souplesse suffisante de la pièce de conformation 150 pour faciliter son démoulage.

Le deuxième matériau peut être un matériau flexible présentant une dureté Shore A comprise entre 50 et 80 afin d'obtenir une rigidité suffisante de la pièce de conformation pour faciliter l'insertion dans l'ébauche.

Le premier matériau et le deuxième matériau peuvent être des silicones présentant une dureté Shore A différente.

Le deuxième matériau peut également être métallique.

La forme et l'emplacement du ou des cœurs en métal doit être adaptés pour permettre l'insertion de la pièce de conformation par la déliaison, et le démoulage de ladite pièce de conformation.

Selon un autre exemple, la pièce de conformation peut comprendre des renforts (variante non illustrée). Ces renforts peuvent être métalliques ou fibreux. Par exemple, les renforts peuvent être réalisés en fibre de verre. Ces renforts permettent une rigidité suffisante de la pièce de conformation pour faciliter l'insertion dans l'ébauche. Le nombre, l'emplacement et la souplesse des renforts doivent être adaptés pour permettre l'insertion de la pièce de conformation par la déliaison, et le démoulage de ladite pièce de conformation.

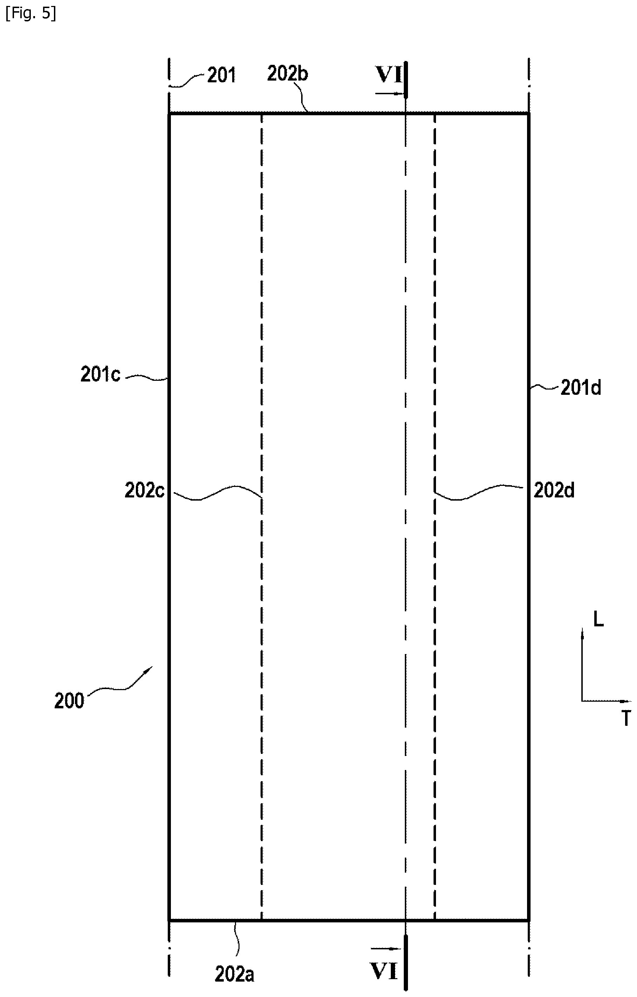

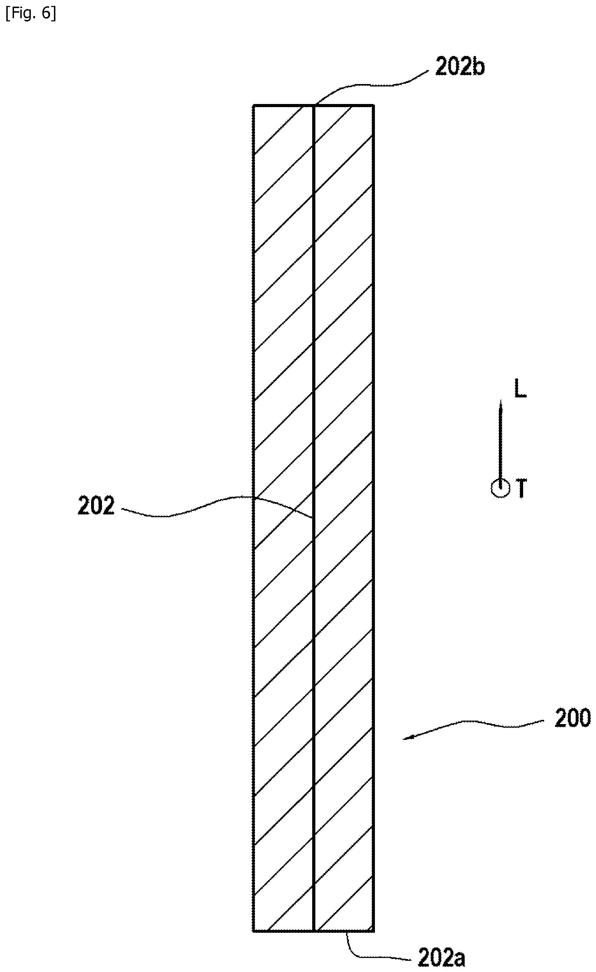

Selon un deuxième mode de réalisation de l'invention présenté sur les figures 5 à 9, on réalise une préforme fibreuse 200 se
lon un procédé de tissage similaire au premier mode de réalisation de l'invention. L'ébauche 200 est obtenue à partir d'une bande 201 tissée par tissage tridimensionnel (3D) ou multicouches, la bande 201 s'étendant de façon générale dans une direction L correspondant à la direction longitudinale de l'aube à fabriquer. Le tissage est réalisé par exemple avec des fils de chaîne s'étendant dans la direction L.

Une déliaison 202 est formée sensiblement au milieu de la bande 201, sur toute la longueur de l'ébauche fibreuse 100 entre les bords longitudinaux 201c et 201d, entre des limites 202c et 202d. La déliaison 202 s'étend entre les bords transversaux 202a et 202b. Cette déliaison 202 est destinée à permettre la formation du passage de la pièce de conformation.

La bande fibreuse peut être traitée pour éliminer l'ensimage présent sur les fibres et la présence d'oxyde à la surface des fibres comme connu en soi.

Egalement connu en soi, une mince couche de revêtement d'interphase de défragilisation peut être ensuite formée sur les fibres de la bande filtreuse par infiltration chimique en phase gazeuse, ou CVI (« Chemical Vapour Inflitration »). Le matériau d'interphase est par exemple du carbone pyrolytique PyC, du nitrure de bore BN ou du carbone dopé au bore BC. L'épaisseur de la couche formée est pas exemple compris entre 10 nanomètres et 100 nanomètres pour conserver une capacité de déformation des ébauches fibreuses.

La bande fibreuse est ensuite imprégnée par une composition de consolidation, typiquement une résine précurseur de carbone ou une résine précurseur de céramique éventuellement diluée dans un solvant. La consolidation peut être réalisée en étuve.

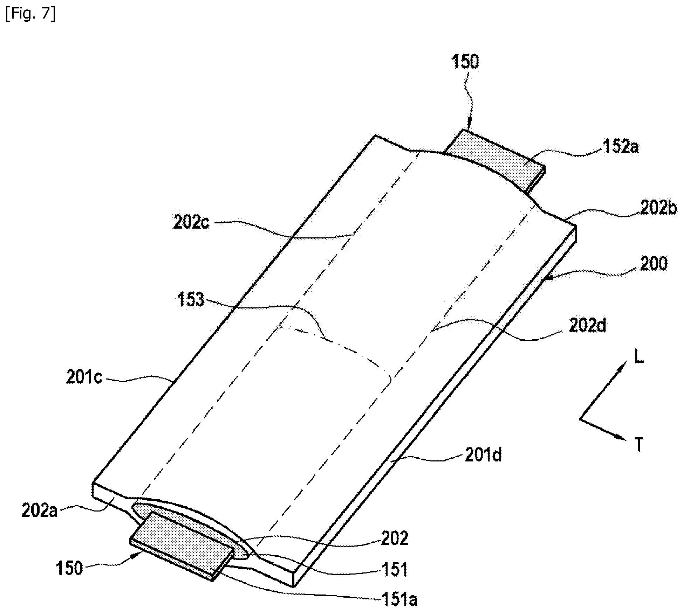

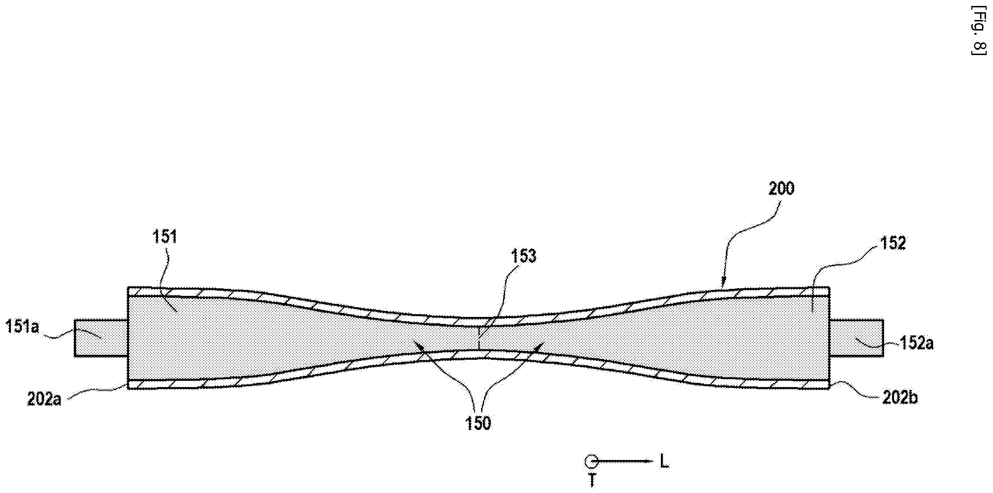

Selon ce deuxième mode de réalisation de l'invention, la conformation de l'ébauche fibreuse 200 en une préforme est réalisée en introduisant une pièce de conformation flexible 150 dans l'ébauche 200 par la déliaison 202, comme présenté sur les figures 7 et 8. La souplesse et la déformabilité de la pièce de conformation 150 permettent de faciliter son insertion dans l'ébauche fibreuse 200, notamment pour l'insertion des parties de plus grande épaisseur. Ainsi, contrairement à une pièce de conformation métallique, la pièce de conformation souple 150 permet des variations d'épaisseur relativement élevées.

On peut s'assurer que l'ébauche fibreuse 200 épouse bien la géométrie de la pièce de conformation 150. La pièce de conformation 150 comprend dans sa longueur selon la direction L une première partie 151 et une deuxième partie 152, séparées par une prédécoupe 153. Cette prédécoupe 153 peut être réalisée en effectuant des incisions le long de la ligne de séparation souhaitée entre la première partie 151 et la deuxième partie 152.

On procède ensuite à la densification de la préforme fibreuse, en comblant la porosité de la préforme, dans tout ou partie du volume de celle-ci, par le matériau constitutif de la matrice.

La matrice du matériau composite constituant la structure à profil aérodynamique peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme disposée autour de la pièce de conformation est placée dans un moule pouvant être fermé de manière étanche avec un logement ayant la forme de la pièce finale moulée et pouvant notamment présenter une forme vrillée correspondant à la forme définitive de la structure à profil aérodynamique. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la structure à profil aérodynamique. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse est préférentiellement réalisée par le procédé bien connu de moulage par transfert dit RTM ("Resin Transfert Moulding"). Conformément au procédé RTM, on place la préforme fibreuse disposée autour de la pièce de conformation 140 dans un moule présentant la forme extérieure de la pièce souhaitée. La pièce de conformation 140 peut jouer le rôle de contre-moule. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

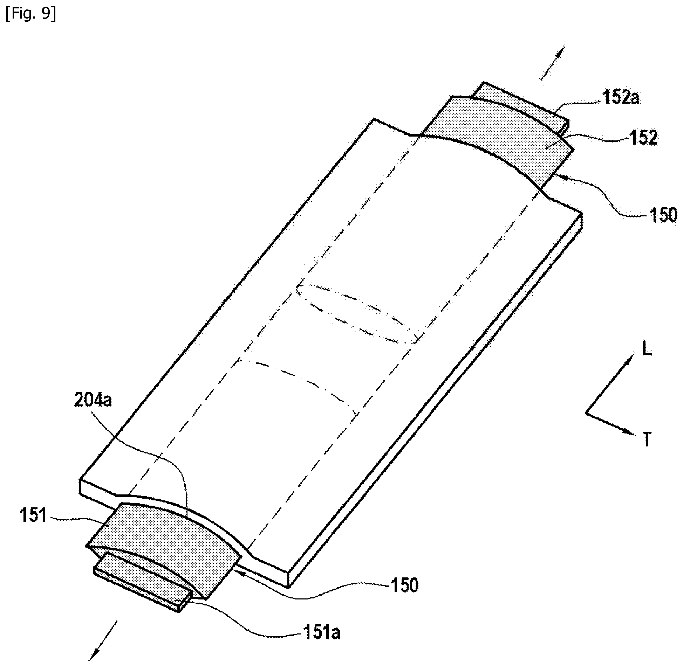

Après l'injection et la polymérisation, comme illustré sur la figure 9, la pièce est démoulée en tirant d'une part la première partie 151 de la pièce de conformation 150 et d'autre part la deuxième partie 152 de la pièce de conformation 150, de sorte à ce que les parties 151 et 152 soient séparées au niveau de la prédécoupe 153. Les incisions effectuées sur la prédécoupe 153 permettent de faciliter la séparation des deux parties 151 et 152.

La séparation entre les parties 151 et 152 de la pièce de conformation 150 permet de réduire les frottements lors du démoulage de la pièce de conformation. En outre, l'emplacement de la découpe 153 peut être choisi de sorte à coïncider avec la section de plus faible aire de la pièce de conformation, comme illustré sur la figure 8. Ainsi, le procédé est adapté à des aubes aux cavités de forme complexe, dont la section n'est pas strictement croissante ou décroissante dans le sens de la longueur de l'aube.

Pour faciliter les étapes de moulage et de démoulage, voire l'étape de consolidation de la préforme en étuve, la pièce de conformation 150 peut comporter des dispositifs d'accrochages 151a, présents sur la première partie 151 de la pièce de conformation 150, et 152a, présents sur la deuxième partie 152 de la pièce de conformation 150, comme illustré sur les figures 7 à 9. Ces dispositifs d'accrochage peuvent permettre de saisir la pièce de conformation en référence sur le moule pour le positionner correctement par rapport à la préforme.

La pièce de conformation 150 peut être réalisée en silicone. Le matériau choisi pour réaliser la pièce de conformation doit supporter les températures de mise en œuvre du composite, particulièrement lors de l'étape de polymérisation. Le matériau doit être suffisamment flexible pour être retiré de la cavité 204a. Ainsi, plus la cavité présente une géométrie tortueuse, plus la pièce de conformation devra présenter une certaine souplesse. En revanche, la pièce de conformation ne doit pas être trop souple pour limiter son absorption de la texture de surface du composite, ce qui génèrerait des difficultés au démoulage. Ainsi, la pièce de conformation 150 a une dureté Shore A comprise entre 30 et 80.

Selon un mode de réalisation particulier de l'invention, la pièce de conformation peut être réalisée en plusieurs matériaux.

Par exemple, la pièce de conformation peut comprendre une partie en deuxième matériau, encadrée par deux parties en premier matériau présentes de part et d'autre de la partie en deuxième matériau selon la direction transversale T, perpendiculaire à la direction L correspondant à la direction longitudinale de l'aube à fabriquer (variante non illustrée).

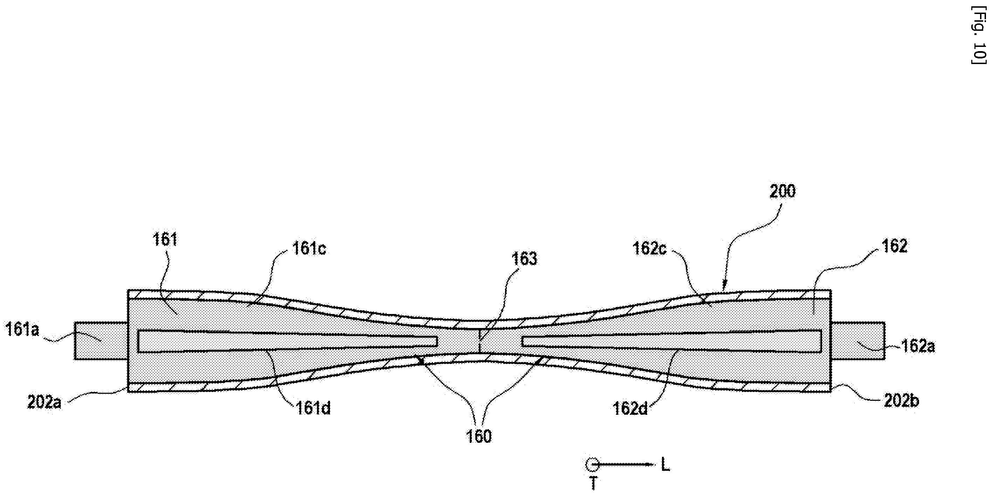

Un autre exemple illustré sur la figure 10 présente une pièce de conformation 160, comprenant dans sa longueur selon la direction L une première partie 161 et une deuxième partie 162, séparées par une prédécoupe 163. Cette prédécoupe 163 peut être réalisée en effectuant des incisions le long de la ligne de séparation souhaitée entre la première partie 161 et la deuxième partie 162. La pièce de conformation 160 peut comporter des dispositifs d'accrochages 161a, présents sur la première partie 161 de la pièce de conformation 160, et 162a, présents sur la deuxième partie 162 de la pièce de conformation 160.

Les deux parties 161 et 162 de la pièce de conformation 160 comprennent un premier matériau 161c ou 162c présent autour d'un cœur en deuxième matériau 161d ou 162d.

Les cœurs en deuxième matériau 161d et 162d des deux parties 161 et 162 de la pièce de conformation peuvent ne pas être en contact, afin de faciliter la séparation au niveau de la jonction 163 au moment du démoulage.

Le premier matériau 161c ou 162c peut présenter une dureté Shore A comprise entre 30 et 60, afin d'obtenir une souplesse suffisante de la pièce de conformation 160 pour faciliter son démoulage.

Le deuxième matériau 161d ou 162d peut être un matériau flexible présentant une dureté Shore A comprise entre 50 et 80, afin d'obtenir une rigidité suffisante de la pièce de conformation 160 pour faciliter l'insertion dans l'ébauche 200.

Le premier matériau 161c ou 162c et le deuxième matériau 161d ou 162d peuvent être des silicones présentant une dureté Shore A différente.

Le deuxième matériau 161d ou 162d peut être métallique, la forme et l'emplacement du ou des cœurs en métal devant être adaptés pour permettre l'insertion de la pièce de conformation par la déliaison, et le démoulage de ladite pièce de conformation.

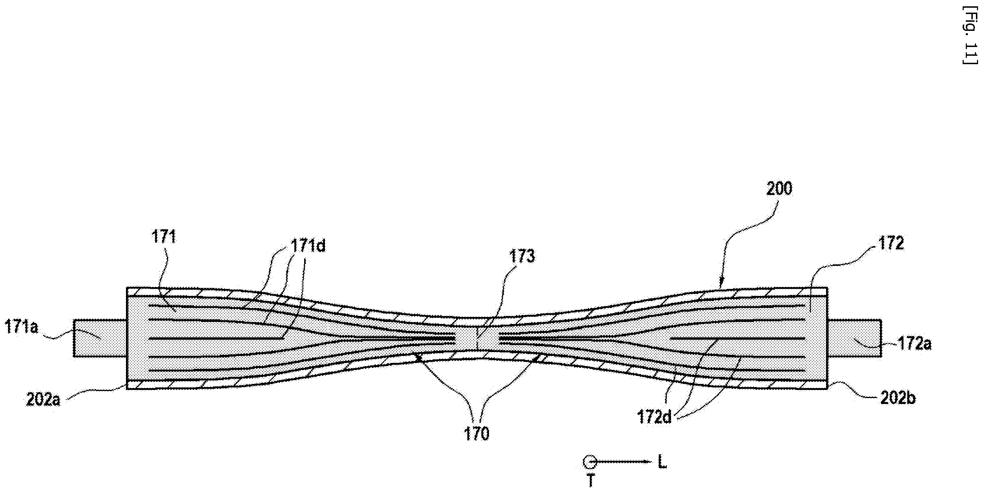

Un autre exemple de pièce de conformation comprenant plusieurs matériaux est illustré sur la figure 11, qui présente une pièce de conformation 170 comprenant des renforts 171d et 172d. La pièce de conformation 170 comprend dans sa longueur selon la direction L une première partie 171 et une deuxième partie 172, séparées par une prédécoupe 173. Cette prédécoupe 173 peut être réalisée en effectuant des incisions le long de la ligne de séparation souhaitée entre la première partie 171 et la deuxième partie 172. La pièce de conformation 170 peut comporter des dispositifs d'accrochages 171a, présents sur la première partie 171 de la pièce de conformation 170, et 172a, présents sur la deuxième partie 172 de la pièce de conformation 170.

Les renforts 171d et 172d peuvent être discontinus au niveau de la jonction 173 entre les deux parties 171 et 172, afin de faciliter la séparation au niveau de la jonction 163 au moment du démoulage.

Les renforts 171d et 172d peuvent être métalliques ou fibreux. Par exemple, les renforts 171d et 172d peuvent être réalisés en fibre de verre. Les renforts 171d et 172d permettent d'obtenir une rigidité suffisante de la pièce de conformation 160 pour faciliter l'insertion dans l'ébauche 200. Le nombre, l'emplacement et la souplesse des renforts doivent être adaptés pour permettre l'insertion de la pièce de conformation par la déliaison, et le démoulage de ladite pièce de conformation.

Dans l'exemple présenté sur les figures 1 à 4, les limites 102c et 102d de la déliaison 102 ne sont pas rectilignes et l'épaisseur de la pièce de conformation 140 est constante dans la direction L. Au contraire, dans les figures 5 à 9, les limites 202c et 202d de la déliaison 202 sont rectilignes et l'épaisseur des pièces de conformation 150, 160 et 170 varie dans la direction L. On ne sort bien entendu pas du cadre de l'invention si les limites de la déliaison ne sont pas rectilignes et que l'épaisseur de la pièce de conformation varie selon la direction L, configuration dans laquelle l'invention trouve également une application avantageuse.

L'expression « comprise entre ... et ... » doit se comprendre comme incluant les bornes.

## Revendications

1. Procédé de fabrication d'une pièce de turbomachine en matériau composite creuse, comprenant au moins :
- la réalisation d'une ébauche fibreuse (100 ; 200) en une seule pièce par tissage tridimensionnel de fils, ladite ébauche comprenant au moins une déliaison (102 ; 202) formant une cavité interne,
- l'insertion d'une pièce de conformation (140 ; 150) dans la cavité interne de l'ébauche fibreuse (100 ; 200) pour obtenir une préforme,
- la densification de la préforme par une matrice pour obtenir une structure ayant un renfort fibreux constitué par ladite préforme et densifié par ladite matrice,
le procédé est tel que la pièce de conformation (140 ; 150) est flexible et que la pièce de conformation (140 ; 150) est retirée mécaniquement de la structure après l'étape de densification, le procédé étant **caractérisé en ce que** la pièce de conformation (140 ; 150) est réalisée dans au moins un matériau dont la dureté Shore A est comprise entre 30 et 80.

2. Procédé selon la revendication 1, dans lequel la pièce de conformation (150) comprend au moins deux parties (151, 152) qui peuvent être séparées lors du retrait de la pièce de conformation de la structure.

3. Procédé selon la revendication 2, dans lequel la jonction (153) entre les deux parties (151, 152) de la pièce de conformation (150) se situe au niveau de la section de plus faible aire de la pièce de conformation.

4. Procédé selon la revendication 2 ou 3, dans lequel la jonction (153) entre les deux parties (151, 152) de la pièce de conformation (150) comprend une pluralité d'incisions permettant de faciliter la séparation desdites deux parties lors du retrait de la pièce de conformation de la structure.

5. Procédé selon l'une quelconque des revendications 1 à 4, dans lequel la pièce de conformation (140 ; 150) comprend au moins une zone d'accrochage (140a ; 151a, 152a) située à l'extérieur de la préforme lors de l'étape de densification.

6. Procédé selon l'une quelconque des revendications 1 à 5, dans lequel la pièce de conformation (160 ; 170) comprend un premier matériau (161c, 162c) et un deuxième matériau (161d, 162d ; 171d, 172d) présentant des duretés différentes, le premier matériau étant présent de part et d'autre du deuxième matériau.

7. Procédé selon la revendication 6, dans lequel le premier matériau (161c, 162c) présente une dureté Shore A comprise entre 30 et 60 et le deuxième matériau (161d, 162d ; 171d, 172d) présente une dureté Shore A comprise entre 50 et 80.

8. Procédé selon l'une quelconque des revendications 1 à 7, dans lequel la pièce de conformation (140 ; 150 ; 160) est réalisée en silicone.

9. Procédé selon la revendication 6, dans lequel le deuxième matériau (161d, 162d ; 171d, 172d) est un métal.

10. Procédé selon l'une quelconque des revendications 1 à 9, dans lequel la pièce en matériau composite est une aube fixe de turbomachine.

## Patentansprüche

1. Verfahren zur Herstellung eines hohlen Teils aus Verbundmaterial für eine Turbomaschine, umfassend zumindest:
- die Verwirklichung eines Faserrohlings (100; 200) aus einem Stück durch dreidimensionale Verwebung von Fäden, wobei der Rohling zumindest einen bindungslosen Bereich (102; 202) aufweist, der einen inneren Hohlraum bildet,
- die Einsetzung eines ersten Formgebungsteils (140; 150) in den inneren Hohlraum des Faserrohlings (100; 200), um eine erste Vorform zu erhalten,
- die Verdichtung der Vorform durch eine Matrix, um eine Struktur zu erhalten, die eine durch die Vorform gebildete und die Matrix verdichtete Faserverstärkung aufweist, wobei das Verfahren derart beschaffen ist, dass das Formgebungsteil (140; 150) flexibel ist und dass das Formgebungsteil (140; 150) nach dem Verdichtungsschritt mechanisch aus der Struktur entfernt wird, wobei das Verfahren **dadurch gekennzeichnet ist, dass** das Formgebungsteil (140; 150) aus zumindest einem Material verwirklicht ist, dessen Shore-A-Härte zwischen 30 und 80 liegt.

2. Verfahren nach Anspruch 1, wobei das Formgebungsteil (150) zumindest zwei Teile (151, 152) umfasst, die während der Entfernung des Formgebungsteils aus der Struktur getrennt werden können.

3. Verfahren nach Anspruch 2, wobei die Verbindung (153) zwischen den zwei Teilen (151, 152) des Formgebungsteils (150) sich an dem geringsten Querschnitt des Formgebungsteils befindet.

4. Verfahren nach Anspruch 2 oder 3, wobei die Schnittstelle (153) zwischen den zwei Teilen (151, 152) des Formgebungsteils (150) mehrere Einschnitte umfasst, die es erlauben, die Trennung der zwei Teile während der Entfernung des Formgebungsteils aus der Struktur zu erleichtern.

5. Verfahren nach einem der Ansprüche 1 bis 4, wobei das Formgebungsteil (140; 150) zumindest eine Verhakungszone (140a; 151a, 152a) umfasst, die sich während des Verdichtungsschritts außerhalb der Vorform befindet.

6. Verfahren nach einem der Ansprüche 1 bis 5, wobei das Formgebungsteil (160; 170) ein erstes Material (161c, 162c) und ein zweites Material (161d, 162d; 171d, 172d) umfasst, die unterschiedliche Härten aufweisen, wobei das erste Material auf beiden Seiten des zweiten Materials vorliegt.

7. Verfahren nach Anspruch 6, wobei das erste Material (161c, 162c) eine Shore-A-Härte zwischen 30 und 60 aufweist und das zweite Material (161d, 162d; 171d, 172d) eine Shore-A-Härte zwischen 50 und 80 aufweist.

8. Verfahren nach einem der Ansprüche 1 bis 7, wobei das Formgebungsteil (140; 150; 160) aus Silikon verwirklicht ist.

9. Verfahren nach Anspruch 6, wobei das zweite Material (161d, 162d; 171d, 172d) ein Metall ist.

10. Verfahren nach einem der Ansprüche 1 bis 9, wobei das Teil aus Verbundmaterial eine feststehende Schaufel einer Turbomaschine ist.

## Claims

1. A method for manufacturing a turbomachine hollow composite material part, comprising at least:
- producing a fibrous blank (100; 200) in one piece by three-dimensional weaving of yarns, said blank comprising at least one de-bonded zone (102; 202) forming an internal cavity,
- inserting a shaping part (140; 150) into the internal cavity of the fibrous blank (100; 200) in order to obtain a preform,
- densification of the preform by a matrix in order to obtain a structure having a fibrous reinforcement consisting of said preform densified by said matrix,
the method is such that the shaping part (140; 150) is flexible and that the shaping part (140; 150) is mechanically withdrawn from the structure after the densification step, the method being **characterised in that** the shaping part (140; 150) is produced from a material having a Shore A hardness between 30 and 80.

2. The method according to claim 1, wherein the shaping part (150) comprises at least two pieces (151, 152) which can be separated during the withdrawal of the shaping part from the structure.

3. The method according to claim 2, wherein the junction (153) between the two pieces (151, 152) of the shaping part (150) is located where the cross-sectional area of the shaping part is smallest.

4. The method according to claim 2 or 3, wherein the junction (153) between the two pieces (151, 152) of the shaping part (150) comprises a plurality of incisions facilitating the separation of said two pieces during the withdrawal of the shaping part from the structure.

5. The method according to any one of claims 1 to 4, wherein the shaping part (140; 150) comprises at least one anchoring zone (140a; 151a, 152a) located on the outside of the preform during the densification step.

6. The method according to any one of claims 1 to 5, wherein the shaping part (160; 170) comprises a first material (161c, 162c) and a second material (161d, 162d; 171d, 172d) having different hardness, the first material being present on either side of the second material.

7. The method according to claim 6, wherein the first material (161c, 162c) has a Shore A hardness between 30 and 60 and the second material (161d, 162d; 171d, 172d) has a Shore A hardness between 50 and 80.

8. The method according to any one of claims 1 to 7, wherein the shaping part (140; 150; 160) is made of silicone.

9. The method according to claim 6, wherein the second material (161d, 162d; 171d, 172d) is a metal.

10. The method according to any one of claims 1 to 9, wherein the composite material part is a turbomachine vane.
